# EUROPÄISCHE PATENTANMELDUNG

(11) **EP 4 438 530 A1**
(43) Veröffentlichungstag der Anmeldung: **02.10.2024**
(21) Anmeldenummer: 24170228.1
(22) Anmeldetag: 30.05.2022
(51) Int. Cl.: B65G 47/61, B65G 17/20, B65G 19/02, B65G 17/32

(54) **TRANSPORTTASCHE ZUM HÄNGENDEN TRANSPORT VON FÖRDERGUT SOWIE BELADESTATION UND FÖRDERANLAGE DIESER TRANSPORTTASCHEN**

(30) Priorität: 02.06.2021 DE 102021002833
(62) Teilanmeldung aus: 22731176.8
(71) Anmelder: SSI Schäfer Automation GmbH (AT), 8051 Graz (AT)
(72) Erfinder: Janzen, Paul, 33619 Bielefeld (DE)
(74) Vertreter: Witte, Weller & Partner Patentanwälte mbB

(57) **Zusammenfassung**

Eine Transporttasche (28) mit einem Rollfahrwerk (1), welches nur ein Paar Rollen (3) aufweist, auf welchen es pendelnd in der Transportschiene (33) gelagert ist. Oberhalb der Rollen (3) befindet sich die obere Kupplung (2) der Transporttasche (28) und ermöglicht den Antrieb und Transport mit einem Förderelement (29), welches vorzugsweise eine handelsübliche Rollenkette mit Mittnehmerpinnen aufweist. Das Auseinandergreifen der Mittnehmer und oberen Kupplungsteilen (2) wird verhindert durch den Aufbau der Transorttasche (28), indem dass die Transporttasche (28) ein ausreichendes Drehmoment (M1) um die Rollen Achse (4) erzeugt und die zulässige Neigung der oberen Kupplung (2) zu der Vertikale (36) beim Transport auf Förderstrecken nicht überschritten wird, sodass eine sicherere Mitnahme der Transporttasche (28) gewährleistet ist. Die Bogen Winkel Weichen (80) für die Förderanlage sind mit wenigen Teilen kostengünstig und betriebssicher aufgebaut. Weitere Vorteile werden erreicht mit der unteren Kupplung (12), mit welcher ein sicherer Transport im Steilförderer (45) in Steigungen bis mindestens 65° besteht. Die Gleitflächen (13) des Rollfahrwerks (1) ermöglichen eine scharfkantige Querförderung in 90° aus der Rollbewegung in die Gleitbewegung und einen kompakten und effizienten Aufbau der Beladestation (50).

## Beschreibung

Die Erfindung betrifft eine Transporttasche zum hängenden Transport von Fördergut nach dem Oberbegriff des Anspruchs 1. Ferner betrifft die Erfindung eine Beladestation für derartige Transporttaschen sowie eine Förderanlage mit einer derartigen Beladestation.

Aus der DE 102004018569B4 ist eine Förderanlage mit Tragetaschen bekannt. Die Tragetaschen bestehen aus einer Hinterwand, einer Vorderwand, Seitenwänden und einem Boden und werden mittels eines Trage-Haken in einem Mitnehmer der Förderanlage eingehängt. Die oberen Ränder sind mittels eines rechteckigen Tragerahmens miteinander verbunden. Zum Öffnen einer durch den Tragrahmen begrenzten Beschickungsöffnung sind am Tragrahmen angebrachte Vorsprünge vorgesehen, die an einer Beschickungsstation über eine Schiene geführt werden, die den Tragrahmen in eine angenähert waagerechte Position bringt, sodass die Beschickungsöffnung geöffnet wird. Nachteilig bei dieser Tragetasche ist das Einbringen des Förderguts von der Seite.

Aus der EP 2130968B1_ist eine Förderanlage bekannt, bei der Tragetaschen mittels Trage-Haken in einem Mitnehmer einer Förderanlage eingehängt werden. Die Tragetaschen weisen eine Hinterwand und eine Vorderwand mit einem Boden auf, der mittels einer lösbaren Kupplung an der Hinterwand angebracht ist. Am oberen Rand sind die Hinterwand und die Vorderwand mittels eines rechteckigen Tragrahmens miteinander verbunden, der seitlich Vorsprünge aufweist. An einer Beladestation laufen diese Vorsprünge auf eine Schiene auf, sodass der Tragrahmen hochgeschwenkt wird, wodurch eine Beschickungsöffnung geöffnet wird. Zum Entladen wird die untere Kupplung geöffnet, sodass ein Fördergut nach unten herausfallen kann.

Nachteilig ist, dass die Tragetasche keine Seitenwände aufweist und dass das Fördergut rausfallen kann. Außerdem ist eine sehr aufwendige Beladestation nötig und die Verbindung der Mitnehmer der Förderanlage mit der Tragetasche ist nicht sicher gewährleistet.

Aus der EP 2418160B1 ist eine Förderanlage mit Tragetaschen für Fördergut bekannt, mit an einer Förderschiene in einer Förderrichtung bewegten Mitnehmern zur Aufnahme der Tragetaschen. Das Fördergut ist in einem Taschenbeutel mit schmalen und breiten Seitenwänden aufnehmbar, wobei in einer der breiten Seitenwänden ein Beschickungsfenster ausgebildet ist. Die Tragetasche ist mittels einer Kupplung von einer stabilen Drehlage mit quer zu der Förderrichtung befindlichem geschlossenen Beschickungsfenster in eine instabile Drehlage mit dem parallel zu der Förderrichtung befindlichem geschlossenen Beschickungsfenster in eine instabile Drehlage mit dem parallel zu der Förderrichtung befindlichen Beschickungsfenster in einen geöffneten Zustand einstellbar und es wird eine unbeeinträchtigte Handhabung des Förderguts zum Beladen oder Entleeren der Tragetasche ermöglicht.

Aus der DE 10 2011101 987A1 ist eine Transporttasche bekannt zur Beförderung eines Fördergutes in einer Förderanlage, mit einem Trägerteil, das zur Aufnahme an einem Förderstrang der Förderanlage ausgebildet ist, mit einem Ladehilfsmittel zur Aufnahme des Fördergutes, wobei das Ladehilfsmittel eine Verschlussklappe aufweist, die eine Handhabungslasche mit einem Klemmabschnitt aufweist, wobei das Trägerteil eine Klemmeinrichtung mit einem Klemmhebel aufweist, der zwischen einer Haltestellung, in der eine Haltekraft auf den Klemmabschnitt einwirkt, und einer Freigabestellung verlagerbar ist, und wobei der Klemmhebel in der Haltestellung derart mit dem Klemmabschnitt gekoppelt ist, dass das aufgenommene Fördergut durch sein Gewicht eine Erhöhung der Haltekraft bewirkt. Nachteilig ist das aufwendige Beladen und Schließen der Transporttasche. Außerdem kann die Transporttasche beim Pendeln aus der Förderanlage rausfallen.

Aus der EP 2 708478B1 ist eine Transporttasche bekannt für eine Hängefördervorrichtung für den hängenden Transport von Objekten, aufweisend einen Halterahmen, einen Taschenbeutel, der am Halterahmen hängt und von dem zu transportierende Objekte aufnehmbar sind, und ein Aufhängeelement, welches mit dem Halterahmen verbunden ist und mittels dessen die Tragetasche an die Hängefördervorrichtung anhängbar ist, um von der Hängefördervorrichtung hängend transportiert zu werden und der Taschenbeutel einen ersten und einen zweiten Beutelabschnitt aufweist, die jeweils einen mit dem Halterahmen verbundenen, ersten Beutelendabschnitt und einen vom Halterahmen abgewandten, zweiten Beutelendabschnitt aufweisen, wobei die zweiten Beutelendabschnitte über einen Gelenkmechanismus miteinander verbunden sind, welcher in eine Entladestellung bringbar ist, in welcher die zweiten Beutelendabschnitte in einem Abstand voneinander angeordnet sind, sodass der Taschenbeutel zur Abgabe von Objekten mit einer zwischen den zweiten Beutelendabschnitten gebildeten Auslassöffnung ist, und welcher in eine Beladestellung bringbar ist, in welcher die zweiten Beutelendabschnitte zueinander benachbart angeordnet sind, sodass die Auslassöffnung geschlossen ist und der Taschenbeutel Objekte aufnehmen kann. Nachteilig ist das aufwendige Beladen und Entladen der Transporttasche. Außerdem kann die Transporttasche beim Pendeln aus der Förderanlage rausfallen.

Die bekannten Transporttaschen zum hängenden Transport und die Förderanlagen für die Transporttaschen erfordern aufwendige Beladestationen, sind nicht energieeffizient genug, teilweise lautstark und mit vielen zusätzlichen Sicherheits-Systemen ausgestattet, um Betriebsausfälle zu vermeiden.

Der Erfindung liegt die Aufgabe zugrunde, die gattungsgemäße Transporttasche und die Förderanlage für die Transporttasche derart weiterzubilden, dass eine exakt zueinander abgestimmte energieeffiziente, betriebssichere, geräuscharme, mit wenigen Teilen aufgebaute, verschleißarme Transporttasche und Förderanlage für die Transporttasche zum Beladen, Sortieren, Entladen, Aufstauen und Lagern der Transporttasche entsteht.

Diese Aufgabe wird erfindungsgemäß durch die Merkmale im Kennzeichnungsteil des Anspruchs 1 und der Unteransprüchen gelöst. Die Transporttasche enthält ein Rollfahrwerk mit nur einem Paar Rollen, auf welchen es pendelnd in der Transportschiene gelagert ist. Oberhalb der Rollen befindet sich die obere Kupplung der Transporttasche, welche den Antrieb und Transport mit einem Förderelement ermöglicht, welches vorzugsweise eine handelsübliche Rollenkette mit Mittnehmerpinnen aufweist. Das Auseinandergreifen der Mittnehmer und oberen Kupplungsteile wird verhindert durch den Aufbau der Transorttasche, indem dass die Transporttasche ein ausreichendes Drehmoment um die Rollen-Achse erzeugt, und die zulässige Neigung der oberen Kupplung zu der Vertikalen beim Transport auf der Förderstrecke nicht überschritten wird, sodass eine sicherere Mitnahme der Transporttasche mit einer einfacher kostengünstigen Rollenkette gewährleistet wird. Die Bogen Winkel Weichen für die Förderanlage sind mit wenigen Teilen betriebssicher aufgebaut. Weitere Vorteile ergeben sich durch die untere Kupplung, mit welcher ein sicherer Transport in Steigungen bis zu 65° gewährleistet werden kann. Die Gleitflächen des Rollfahrwerks ermöglichen eine scharfkantige Querförderung in 90° aus der Rollbewegung in die Gleitbewegung und einen kompakten und effizienten Aufbau der Beladestation. Die Gelenk Verbindung des Grundkörpers und der Halteplatte des Rollfahrwerks entlastet die beim Bremsen oder Beschleunigen als Folge der dynamischen Axialverschiebungen entstehende Kräfte, sodass als Konsequenz die Rotation und Pendelbewegung der Transporttasche sich nicht auf den Grünkörper und die Rollen übertragen und somit ein dauerhafter verschleißarmer Betrieb ermöglicht werden kann.

Weitere Merkmale, Vorteile und Einzelheiten der Erfindung ergeben sich aus der folgenden Beschreibung von Ausführungen und Beispielen anhand der Zeichnungen.

Es wird dargestellt:
- Fig. 1: eine perspektivische Rückansicht des Rollfahrwerks,
- Fig. 2: eine Seitenansicht des Rollfahrwerks,
- Fig. 3: eine Seitenansicht der Transporttasche,
- Fig. 4: eine perspektivische Rückansicht der Transporttasche,
- Fig. 5: eine Seitenansicht der Transporttaschen in der Förderanlage mit einem Förderelement,
- Fig. 6: eine Vorderansicht eines Fragments der Transporttasche in der Förderanlage mit einem Förderelement,
- Fig. 7: eine Seitenansicht der leeren Transporttaschen in der Förderanlage auf einer Staustrecke mit einem Anhalter,
- Fig. 8: eine Vorderansicht eines Fragments der Transporttasche in der Förderanlage auf einer Staustrecke mit einem Anhalter,
- Fig. 9: eine Vorderansicht des Rollfahrwerks mit der Halteplatte im Pendeln,
- Fig. 10: eine Seitenansicht im Schnitt des Rollfahrwerks mit der Halteplatte im Pendeln,
- Fig. 11: eine perspektivische Rückansicht des Rollfahrwerks mit den eingehängten Gegenständen,
- Fig. 12: eine Vorderansicht des Rollfahrwerks mit der Halteplatte in Rotationsbewegung,
- Fig. 13: eine Draufsicht im Schnitt des Rollfahrwerks mit der Halteplatte in Rotationsbewegung,
- Fig. 14: eine Seitenansicht im Schnitt der Transporttaschen im Steilförderer bei dem hochfahren,
- Fig. 15: eine Seitenansicht im Schnitt der Transporttaschen im Steilförderer bei dem runterfahren,
- Fig. 16: eine perspektivische Vorderansicht der Beladestation mit den Transporttaschen,
- Fig. 17: eine perspektivische Rückansicht der Beladestation mit den Transporttaschen,
- Fig. 18: eine perspektivische Seitenansicht im Schnitt der Querförderung der Transporttaschen,
- Fig. 19: eine Vorderansicht der Querförderung der Transporttasche,
- Fig. 20: eine Seitenansicht der Beladestation mit einem Transportband,
- Fig. 21: eine perspektivische Vorderansicht der Quertransport Weichen für die Transporttaschen,
- Fig. 22: eine perspektivische Draufsicht der Quertransport Weichen für die Transporttaschen,
- Fig. 23: eine Vorderansicht im Schnitt der Querförderung der Transporttasche auf den Gleitflächen,
- Fig. 24: eine Unteransicht der Bogen Winkel Weiche für die Transporttaschen mit der Weichenzunge geschaltet linear,
- Fig. 25: eine Unteransicht der Bogen Winkel Weiche für die Transporttaschen mit der Weichenzunge geschaltet im Bogen Winkel,
- Fig. 26: eine perspektivische Seitenansicht der Bogen Winkel Weiche für die Transporttaschen,
- Fig. 27: eine perspektivische Seitenansicht des Grundkörpers der Bogen Winkel Weiche,
- Fig. 28: eine perspektivische Seitenansicht der Weichenzunge.

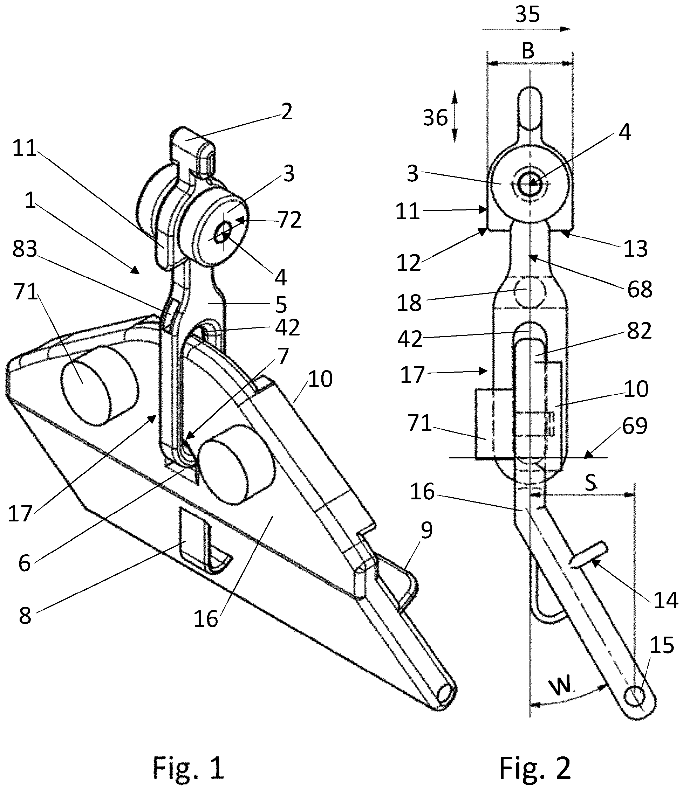

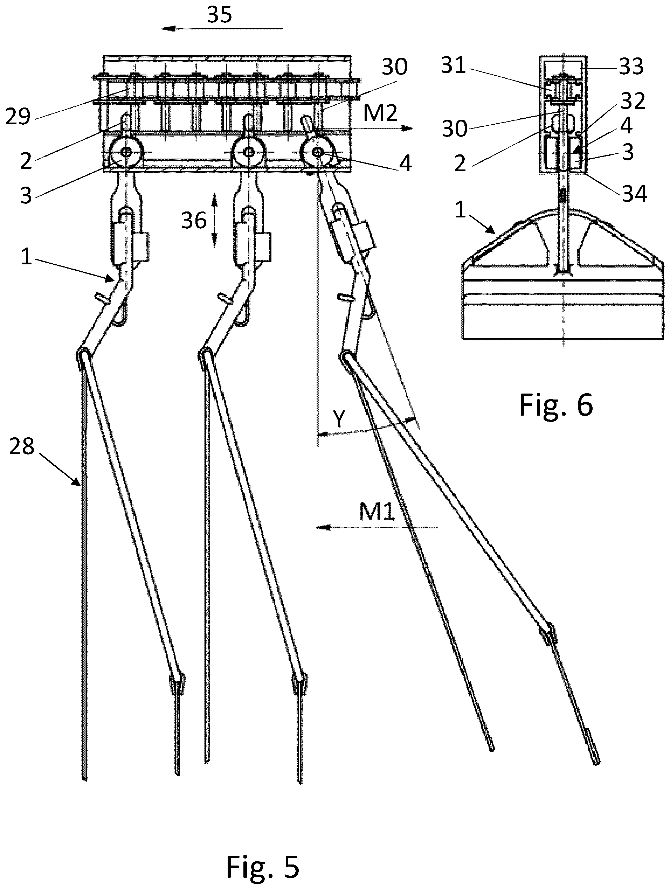

Fig. 1 und 2 zeigen ein Rollfahrwerk 1 das nur zwei Rollen 3 enthält, auf welchen es pendelnd in der Transportschiene 33 (Fig. 5) gelagert wird. Das Rollfahrwerk 1 beinhaltet einen Grundkörper 5 mit den im oberen Bereich eingebauten Rollen 3 und eine Halteplatte 16 mit Befestigung Mitteln15 für den Beladerahmen 19. Der Grundkörper 5 hat oberhalb der Rollen 3 eine obere Kupplung 2 zum Übertragen der Antriebskraft (Fig. 5) der Mitnehmer 30 des Förderelements 29. Der Grundkörper 5 und die Halteplatte 16 sind mit einem technischen Gelenk 17 verbunden. Das technischen Gelenk 17 wird gebildet mit der Gelenkfassung 42 in Langlochform im Grundkörper 5, welches das gebildete durch die Öse 6 Gelenkelement 82 der Halteplatte 16 umgreift. Das technische Gelenk 17 beinhaltet Dreh- und Schwenk-Achsen 68 und 69. Entlang der Ebene durch die Achse 4 und 68 beinhaltet das technische Gelenk 17 keine Dreh- und Schwenk-Achse, sodass beim Pendeln des Rollfahrwerks 1 um die Achse 4, der Grundkörper 5 und die Halteplatte 16 im Wesentlichen wie fest verbunden wirken, und durch das Eigengewicht des Rollfahrwerks 1 ein maximal mögliches Drehmoment beim Pendeln um die Achse 4 erzeugt wird. Der Grundkörper 5 beinhaltet Gleitflächen 13 zum Quertransport im scharfen Winkel zu der Rollbewegung und untere Kupplungen 12 für den Transport auf Steigungen bis mindestens 65°. Die Halteplatte 16 ist winkelartig in Richtung 35 ausgebildet und weist gegenüber der Ebene durch die Achse 4 und 68 einen Winkel W von 10° bis 45°, vorzugsweise von 25° bis 35°auf. Die Halteplatte 16 enthält eine Führung 9 zum Quertransport in der Beladestation 50, Schalldämmungsmittel (71) und Anschlagflächen 10 für die Schalldämmungsmittel (71). Der Grundkörper 5 und die Halteplatte 16 bestehen vorzugsweise aus Kunststoff, besonders bevorzugt aus Kohlenstofffaserverstärkten Polyamid, die Rollen 3 sind vorzugsweise Leichtlauf Kugellagern mit einer Bandage aus Kunststoff, welcher vorzugsweise POM darstellt. Im Grundkörper 5 befindet sich in der Fassung 83 ein Datenträger 18 welcher vorzugsweise ein beschreibbarer Chip ist.

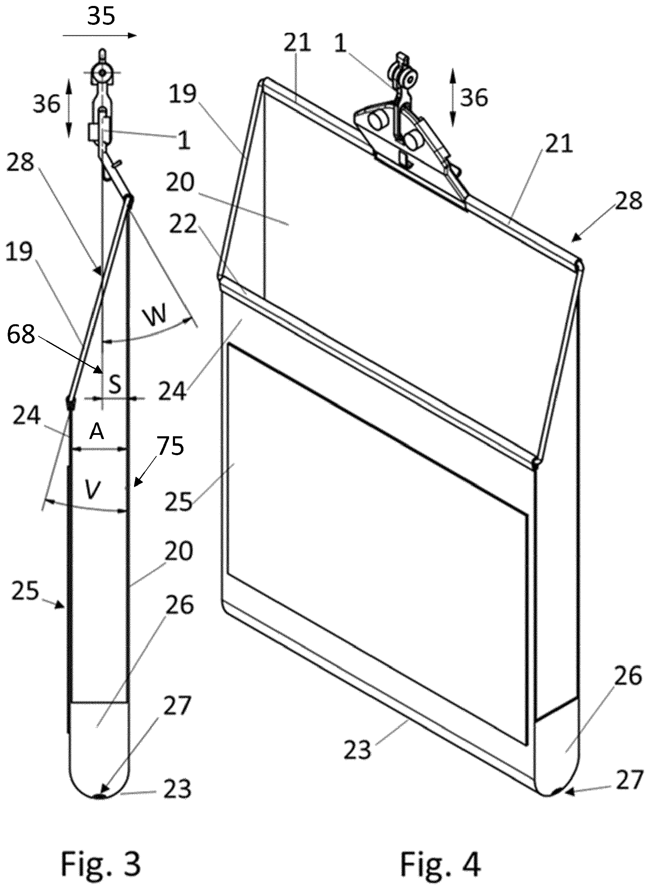

In den Fig. 3 und 4 ist eine Transporttasche 28 abgebildet, bestehend aus einem Rollfahrwerk 1 und einem mit dem Rollfahrwerk 1 verbundenem Beladerahmen 19. Der Beladerahmen 19 ist rechteckig ausgebildet und besteht vorzugsweise aus einem Metalldraht. Der Beladerahmen 19 ist in die Halteplatte 19 fest und nicht drehbar eingebaut mit einem Winkel V zum Grundkörper um die Ebene durch die Achse 4 und 68 von 5° bis 45° vorzugsweise von 10° bis 30° besonders bevorzugt von 12° bis 20° und ist gegengerichtet zum Winkel W. Die entstehende Tiefe A zwischen der Vorderwand 20 und Rückwand 24, der Transporttasche 28 enthält im Wesentlichem ein Maß von 2S, sodass der Grundkörper 5 eine im Wesentlichem vertikale 36 Position einnimmt und die Tiefe A der Transporttasche 28 ein Maß von 20 bis 150 mm aufweist, vorzugsweise von 40 bis 80 mm, besonders bevorzugt von 55 bis 70 mm aufweist und eine manuelle Entladung der Transporttaschen 28 ermöglicht. Auf dem Beladerahmen 19 ist die faltbare in Förderrichtung 35 Tragwand 75 mithilfe von Säumen befestigt auf den Querstangen des Beladerahmens 19 und die Säume beinhalten ein Öffnungsmaß, ausreichend zum Draufziehen auf den Beladerahmen 19, vorzugsweise ein Maß von 20 bis 50 mm. Anschließend werden die Säume mit Schutzleisten (21,22) verkleidet und so gegen Schläge gesichert. Die Tragwand 75 besteht aus einer Vorderwand 20, einer Rückwand 24 auf welcher eine Versteifungsplatte 25 befestigt ist, einer Bodenwand 23, und Seitenwänden 26. Die Tragwand 75 der Transporttasche 28 ist zumindest teilweise aus flexiblem Stoff gebildet, vorzugsweise die komplette Tragwand 75 und von außen eine Beschichtung aufweist mit maximal möglich niedrigen Gleitwerten zur Verhinderung der seitlichen Verschiebung der Transportaschen 28 im gestauten Zustand. Der Stoff ist schwer entflammbar und insbesondere halogenfrei gebildet, besteht mindesten 50000 Scheuertouren und beinhaltet eine Farbfestigkeit im Innerem Bereich der Tragwand 75 ausreichend zum Verhindern des Verfärbens des Transportierendes Förderguts 53, insbesondere der Textilien beim längeren Lagern von mindestens 30 Tagen und Temperaturen bis zu 50 °C.

Die Förderanlage gemäß Fig. 5 und 6 weist vorzugsweise eine aus Aluminium gefertigte Transportschiene 33 mit einem kastenförmigen und symmetrisch ausgebildeten Querschnitt mit Förderelementführungen 31, mit den oberen Begrenzung Stegen 32 für die Rollen 3 und den Lauf Stegen 34 für das Rollfahrwerk 1 auf. Die Förderelementführungen 31 nehmen mit ihren zugewandten rechteckigen Enden zwischen sich ein Trum eines endloses Förderelements 29 auf. Das Förderelement 29 ist mittels eines nicht dargestellten Elektromotors umlaufend antreibbar. Der Elektromotor weist eine Beschleunigungsrampe und Bremsrampe auf zur Verringerung der Axialverschiebungen und der dadurch entstehenden Kräften. Das Förderelement 29, wie aus Fig. 5 und 6 entnehmbar, weist vorzugsweise eine kostengünstige handelsübliche Rollenkette auf mit um die Achsen schwenkbare Gelenke. An der Unterseite beinhaltet die Rollenkette die Mittnehmer 30 in Pinform. Unterhalb der Rollenkette befinden sich in der Transportschiene 33 die in Richtung 35 angeriebene Transportaschen 28. Bei dem dynamischen Druck der Mittnehmer 30 auf die obere Kupplung 2 durch das Beschleunigen und Abbremsen des Förderelements 29 steht die Transporttasche 28 unter einem Winkel Y, welcher nicht überschritten werden darf, um eine sicherere Mitnahme der Transporttasche 28 zu gewährleisten. Dies wird erreicht durch den Aufbau des Rollfahrwerks 1 (siehe Beschreibung Fig. 1, 2), und mit dem fest und nicht drehbar eingebautem Beladerahmen 19, wodurch die Transporttasche 28 ein wesentlich größeres Drehmoment M1, gegenüber dem Antriebs Drehmoment M2, um die Achse 4 erzeugt, zum Verhindern des Überschreitens der maximal zulässigen Neigung (Y) der oberen Kupplung (2) zu der Vertikale (36) und des Auseinandergreifens der Mittnehmer (30) des Förderelementes (29) und der oberen Kupplungen (2) des Rollfahrwerks (1) sodass eine sicherere Mitnahme der Transporttasche 28 entsteht.

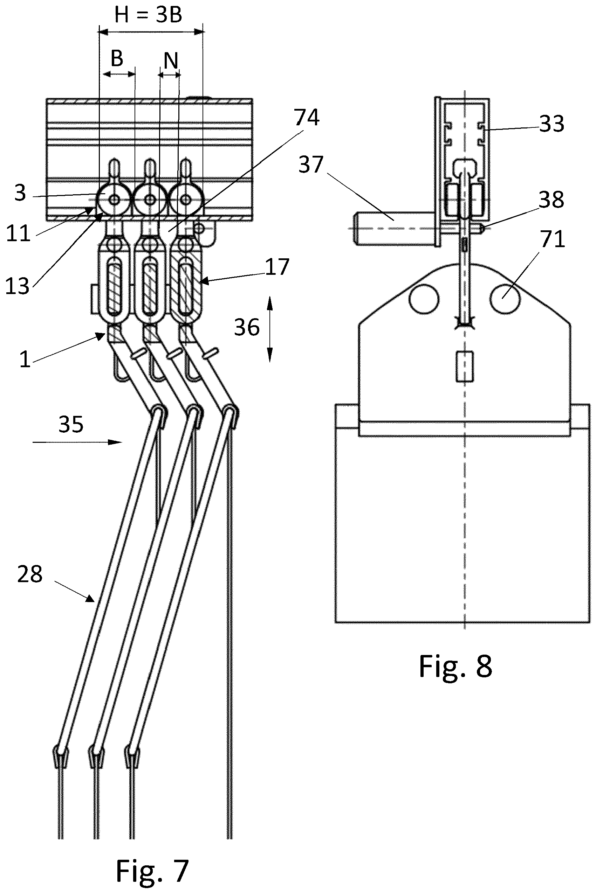

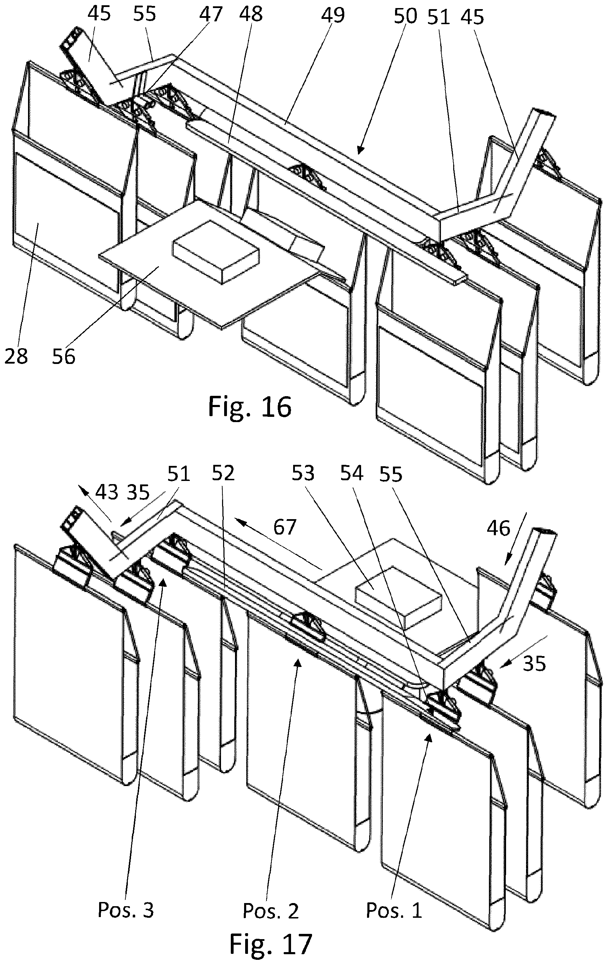

Gemäß Fig. 7 und 8 ist eine Förderanlage beim Aufstauen der leeren Transporttaschen 28 gezeigt. Die Transporttaschen 28 werden mit einem Anhalter 37 oder mit einer gemäß Fig. 16 Vereinzelung 47 angehalten und fahren zusammen, wobei sie sich in Förderrichtung 35 falten und so die maximale Dichte zueinander Erzeugen mit einer Gesamttiefe H. Das Rollfahrwerk 1 hat im Rollenbereich 11 ein Maß B größer als der Rollendurchmesser, vorzugsweise von 0,5 bis 3 mm, besonders bevorzugt von 1,5 bis 2 mm und das Maß B bildet im Wesentlichem die maximale Tiefe einer leeren gefalteten in Förderrichtung 35 Transporttasche 28, vorzugsweise ist es größer, sodass beim Aufstauen der leeren Transportaschen 28 die Gesamttiefe ein Maß von H = B x Zahl der Transportaschen 28 nicht überschreitet. Die Breite N unter den Gleitflächen 13 bildet eine Öffnung 74 auf, ausreichend zum Hineinragen eines Stoppelements 38 der Vereinzelung 47 oder Anhalters 37, zum Sortieren der leeren oder beladenen Transporttaschen 28.

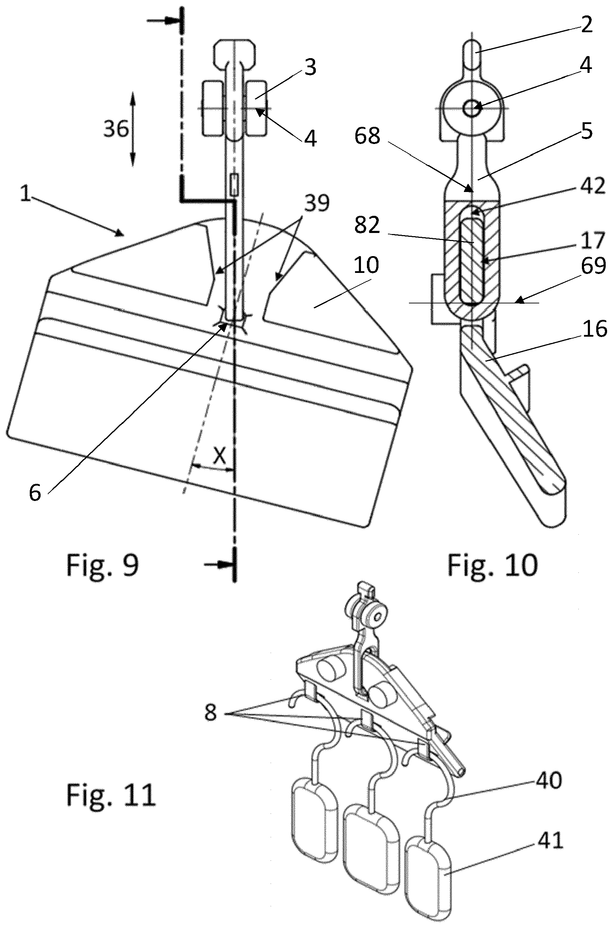

Gemäß Fig. 9 und 10 ist das Rollfahrwerk 1 gezeigt bei dem Pendeln um die Achse 69 des technischen Gelenks 17. Der Grundkörper 5 und die Halteplatte 16 sind mit einem technischen Gelenk 17 verbunden, sodass die Halteplatte 16 um die Achse 69 auf einem Winkel X in dem Grundkörper 5 pendeln kann und so beim Transport die Übertragung der entstehenden dynamischen Kräfte auf den Grundkörper 5 und insbesondere auf die Rollen 3 verhindert. Gleichzeitig bleibt die Stabilität des Rollfahrwerks 1 beim Pendeln um die Achse 4 erhalten und die Transporttasche 28 ein maximal mögliches Drehmoment M 1 erzeugt. Für die Begrenzung des Winkels X sind die Anschläge 39 vorgesehen.

Mit den Ösen 8, wie auf Fig. 11 dargestellt, besteht die Möglichkeit bei Bedarf mit einem Haken 40 zusätzliche Gegenstände 41 oder Datenträger mit der Transporttasche 28 zu Fördern.

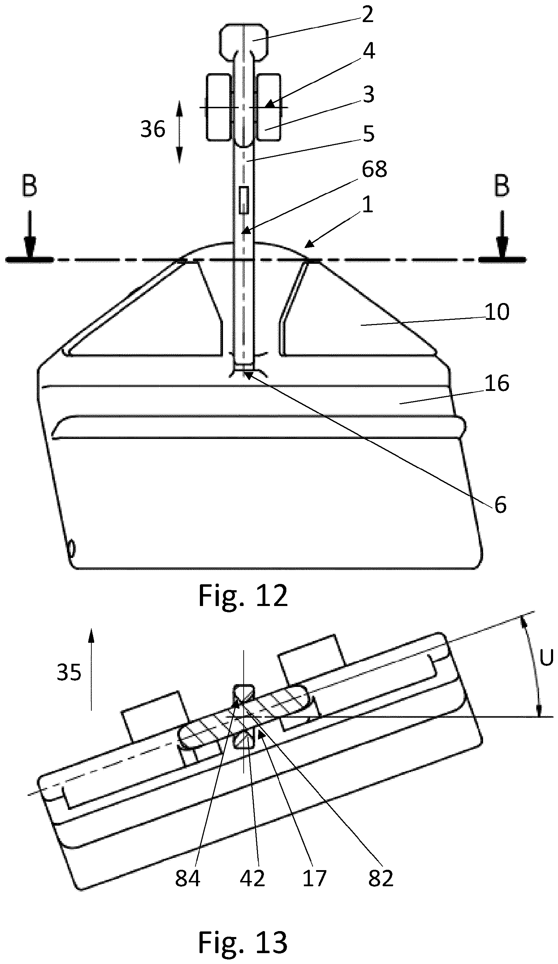

Gemäß Fig. 12 und 13 ist das Rollfahrwerk 1 gezeigt, bei der Rotationsbewegung um die Achse 68, welche beim Bremsen oder Beschleunigen als Folge der dynamischen Axialverschiebungen entstehen. Um diese Kräfte zu entlasten und die Übertragung auf den Grundkörper 5 und insbesondere auf die Rollen 3 zu vermeiden sind die Kanten der Gelenkfassung 42 angefasst oder abgerundet und die Halteplatte 16 mit dem Gelenkelement 82 kann um die Achse 69 auf einem Winkel U rotieren und so beim Transport die Übertragung der entstehenden dynamischen Kräfte auf den Grundkörper 5 und die Rollen 3 verhindern. Gleichzeitig wird die Rotationsbewegung der Halteplatte 16 mit dem Anschlägen 84 des Grundkörpers 5 begrenzt auf einen Rotationswinkel U von 10° bis 45°, vorzugsweise von 15° bis 35°. Im Ruhezustand hängt die Halteplatte 16 im Wesentlichem senkrecht zur Förderrichtung 35, indem sie mit der Winkelförmiger gemäß Fig. 1 Vertiefung 7 der Öse 6 unter Eigengewicht in die Gelenkfassung 42 hineingleitet. Gleichzeitig bleibt die Stabilität des Rollfahrwerks 1 beim Pendeln um die Achse 4 erhalten.

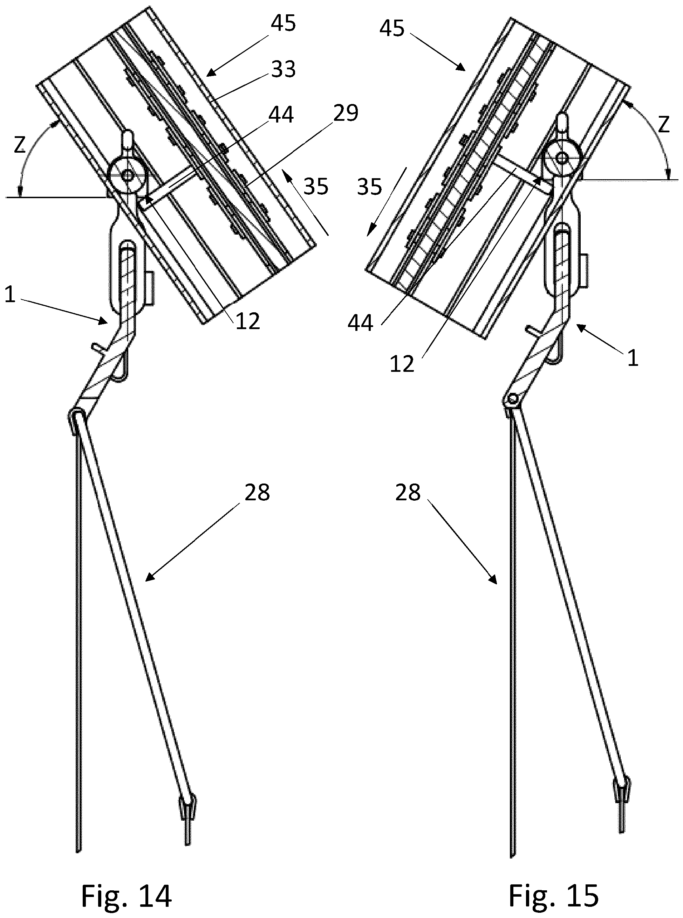

Gemäß Fig. 14 und 15 sind Steilförderer 45 gezeigt zum Hoch- und Runterfahren der Transporttaschen 28 bei Steigungen außerhalb der maximal zulässigen Neigung Y der oberen Kupplung 2, in einem Winkel Z bis mindestens 65° mit dem Antrieb an die untere Kupplung 12 mit Hilfe der Steigungsmitnehmer 44. Der Steilförderer 45 weist eine Transportschiene 33 auf mit einem kastenförmigen und symmetrisch ausgebildeten Querschnitt mit Förderelementführungen 31 auf, mit den oberen Begrenzung Stegen 32 für die Rollen 3 und Lauf-Stegen 34 für das Rollfahrwerk 1. Die Förderelementführungen 31 nehmen einen Trum eines endloses Förderelements 29 auf. Das Förderelement 29 ist mittels eines nicht dargestellten Elektromotors umlaufend antreibbar und weist vorzugsweise eine kostengünstige handelsübliche Rollenkette mit Steigungsmitnehmern 44 auf, welche vorzugsweise eine breite Mitnehmerfläche aufweisen. Unterhalb der Antriebskette befinden sich in der Transportschiene 33 die in Richtung 35 nach oben angeriebene Transporttaschen 28 und Richtung 46 nach unten die abgebremste Transporttaschen 28.

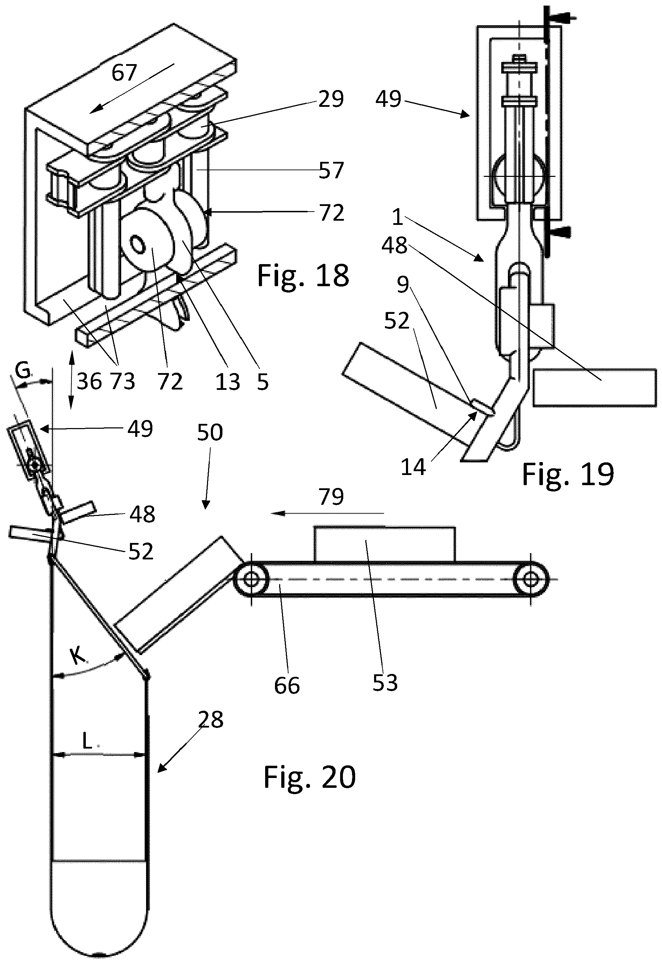

Gemäß Fig. 16 und 17 ist die Beladestation 50 abgebildet. Die Beladestation 50 dient zum Aufstellen und Positionieren der Transporttaschen 28 am Beladetisch 56. Die Transporttaschen 28 werden vorzugsweise mit einem Steilförderer 45 in Richtung 46 angeliefert auf die Gefälle-Strecke 55 mit der Vereinzelung 47, aus der die Transporttaschen 28 vereinzelt auf den quer zur der Förderrichtung 35 angeordneten Förderer 49 in eine Gleitbewegung in Förderrichtung 67 auf den Gleitflächen 13 des Rollfahrwerks 1 mit Hilfe von seitlichen Mitnehmern 57 auf den Gleitstegen 73 gemäß Fig. 18, versetzt werden. Vorgesehen ist ein stetiges Fördern der Transporttaschen 28 mit Ausnahme der Zeit zum Beladen der Transporttaschen 28 mit dem Fördergut 53. Beim Quertransport im Förderer 49 ist gleichzeitig mindestens eine Transporttasche 28 vorgesehen, vorzugsweise drei in folgender Zuordnung: Pos.1 - Startposition der leeren Transporttasche 28 aus der Rollbewegung in die Gleitbewegung im Anschluss aus der Gefälle-Strecke 55 in den Förderer 49 in Förderrichtung 67, Pos.2 - Beladeposition vor dem manuellem Beladetisch 56 oder Gemäß Fig. 20 vor dem Transportband 66 und Beladen der Transporttasche 28 mit Fördergut 53, Pos.3 - Startposition der beladenen Transporttasche 28 aus der Gleitbewegung in die Rollbewegung in Förderrichtung 35 in die Gefälle-Strecke 51 mit vorzugsweise anschließendem Wegtransport mit einem Steilförderer 45 in Richtung 43. Unter dem Förderer 49 Gemäß Fig. 16 - 20 befindet sich die Leiste 52 zum Ausrichten des Beladerahmens 19 auf einen Winkel K mithilfe der Halteplatte 16 und der Führung 9. In Pos. 1 hat die Leiste 52 eine Schräge 54 zur Fixierung der Führung 9 mit der Gleitfläche 14 bei der Aufnahme. Zusätzlich ist vorzugsweise eine Leiste 48 vorgesehen zur sicheren Führung der Transporttasche 28 bei dem Quertransport. Der Winkel K des Beladerahmens 19, wird Gemäß Fig. 20, in der Pos. 2 im Bereich des Beladens mit dem Fördergut 53, auf ein Maß von 20° bis 55°, vorzugsweise von 30° bis 45°, besonders bevorzugt von 35° bis 40°geöfnet. Dies geschieht durch die angewinkelte Positionierung des Förderers 49 inklusive der Leisten 52, 48 auf einen Winkel G gegenüber der Vertikale 36.

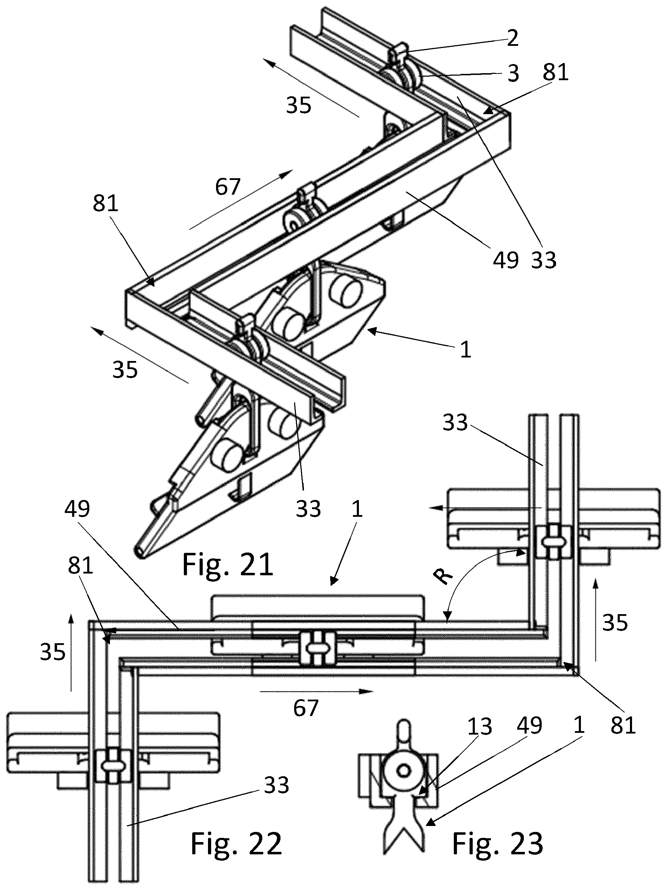

Gemäß Fig. 21 bis 23 sind Quertransport Weichen 81 abgebildet zum scharfkantigen Wechseln der Förderrichtung 35 auf einen Winkel von 70° bis 110°, vorzugsweise von 85° bis 95°, besonders bevorzugt auf 90° in Richtung 67 aus der Rollbewegung in die Gleitbewegung und umgekehrt aus der Gleitbewegung in die Rollbewegung.

Die Transportschiene 33 wird in einem vorzugsweise 90° Winkel an die Transportschiene 67 mit den Gleitstegen 73 gemäß Fig. 18 angeschlossen.

Im Winkel Bereich wird der Transport von den Rollen 3 auf die Gleitflächen 13 des Rollfahrwerks 1 übernommen. Der Antrieb findet mithilfe des Förderelements 29 mit Seitlichen Mittnehmern 57 an der Seitlichen Kupplung 72 des Rollfahrwerks 1 statt.

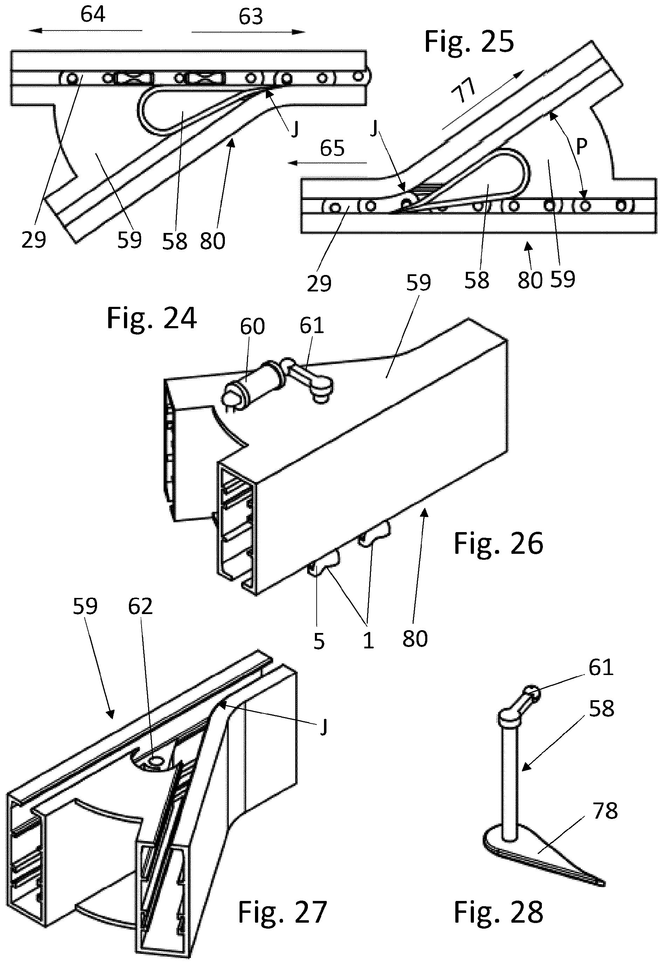

Gemäß Fig. 24 bis 28 wird die Bogen Winkel Weiche 80 dargestellt mit einer Winkelverteilung P der Transportbahnen von 20° bis 45°, vorzugsweise von 30° bis 40° mit einem Radiusübergang J im Winkel Bereich. Die Bogen Winkel Weiche 80 besteht im Wesentlichen aus einem Grundkörper 59, einer im Lager 62 eingebauten schaltbaren Weichenzunge 58 mit einer Spitze 78 zum Einschleusen oder Ausschleusen von Transporttaschen 28 in die Förderrichtungen 65, 77, 63, 64 und einem Antrieb 60 zum Umschalten der Förderrichtung. Das Umschalten in Förderrichtung 64, 77 gegen die Weichenzungenspitze 78, erfolgt mit dem Antrieb 60 und in die Richtung 63, 65 vorzugsweise von dem Grundkörper 5 beim angetriebenen Transport des Rollfahrwerks 1 der Transporttasche 28.

Die angewinkelte Seite der Weiche 80 beinhaltet ein hier nicht dargestelltes eigenes Antriebssystem, welches vorzugsweise ein Transmission Antrieb von dem Förderelement 29 aufweist und im Wesentlichem mit gleicher Geschwindigkeit des Förderelements 29 läuft. Die Schaltung der angetriebenen Bogen Winkel Weiche 80 wird aus Sicherheitsgründen vorzugsweise zu mindestens teilweise zusätzlich von den Rollfahrwerken 1 gesteuert, sodass ihre Position vor dem Schalten mit hier nicht dargestellten Sensoren abgefragt wird. Zu der Vermeidung einer Beschädigung und längeren Betriebsausfällen der Förderanlage sind hier nicht dargestellte Sensoren und Montagefenster vorgesehen zum Anhalten der Förderanlage bei Fehlschaltungen der Bogen Winkel Weichen 80 und mit Möglichkeiten bei Bedarf zur schnellen Reparatur.

## Patentansprüche

1. Transporttasche (28) für eine Förderanlage zur Aufnahme von Fördergut (53) mit einer Tragwand (75), welche eine Vorderwand (20), eine Rückwand (24), Seitenwände (26) und eine Bodenwand (23) aufweist
- einen mit der Tragwand (75) verbundenem Beladerahmen (19) der die obere Beschickungsöffnung der Tragwand (75) aufweist zum beabstandeten Anordnen der Vorderwand (20) von der Rückwand (24) **dadurch gekennzeichnet,**
**dass** die Transporttasche (28) ein Rollfahrwerk (1) aufweist und
**dass** das Rollfahrwerk (1) im oberen Bereich nur zwei Rollen (3) enthält, auf welchen es pendelnd in der Transportschiene (33) gelagert ist und
**dass** oberhalb der Rollen (3) das Rollfahrwerk (1) eine obere Kupplung (2) aufweist für die Übertragung der Antriebskraft des Förderelements (29) und
**dass** am Rollfahrwerk (1) der Beladerahmen (19) angebracht ist.

2. Transporttasche (28) nach Anspruch 1, **dadurch gekennzeichnet,**
**dass** das Rollfahrwerk (1) aus mindestens einem Grundkörper (5) und einer Halteplatte (16) für den Beladerahmen (19) besteht und
**dass** der Grundkörper (5) und die Halteplatte (16) miteinander verbunden sind mithilfe eines technischen Gelenks (17). Das technische Gelenk (17) wird gebildet mit der Gelenkfassung (42) im Grundkörper (5) und dem Gelenkelement (82) der Halteplatte (16) und beinhaltet Dreh- und Schwenk-Achsen, wobei entlang der Ebene durch die Achse (4) und (68) weist das technische Gelenk (17) keine Dreh- und Schwenk-Achse auf, sodass beim Pendeln des Rollfahrwerks (1) um die Achse (4) der Rollen (3), als Folge der dynamischen Achsialverschiebungen beim Bremsen oder Beschleunigen der Transporttasche (28), der Grundkörper (5) und die Halteplatte (16 im Wesentlichen wie fest verbunden wirken, und durch das Eigengewicht und die Länge des Rollfahrwerks (1) ein maximal mögliches Drehmoment um die Achse (4) aufweisen, sodass die leere Pendelnde Transporttasche (28) ein wesentlich größeres Drehmoment (M1), gegenüber dem Antriebs-Drehmoment (M2), um die Achse (4) erzeugt, zum verhindern des Überschreitens der maximal zulässiger Neigung (Y) der oberen Kupplung (2) zu der Vertikale (36) und des Auseinandergreifens der Mittnehmer (30) des Förderelementes (29) und der oberen Kupplungen (2) des Rollfahrwerks (1).

3. Transporttasche (28) nach Anspruch 1 oder 2, **dadurch gekennzeichnet,**
**dass** das Rollfahrwerk (1) mit dem technischen Gelenk (17) eine Dreh- und Schwenk-Achse (69) aufweist, sodass die Halteplatte (16) in dem Grundkörper (5) pendeln kann und so beim Transport die Übertragung der entstehenden dynamischen Kräfte auf den Grundkörper (5) und die Rollen (3) verhindert und
**dass** das Rollfahrwerk (1) mit dem technischen Gelenk (17) eine Dreh- und Schwenk-Achse (68) aufweist, sodass die Halteplatte (16) eine Rotationsbewegung in dem Grundkörper (5) ausführen kann und so beim Transport die Übertragung der entstehenden dynamischen Kräfte auf den Grundkörper (5) und die Rollen (3) verhindert, wobei im Ruhezustand die Halteplatte (16) im Wesentlichem senkrecht zur Förderrichtung (35) hängt, indem sie mit der Vertiefung (7) der Öse (6) der Halteplatte (16) unter Eigengewicht in die Gelenkfassung (42) hineingleitet.

4. Transporttasche (28) nach einem der Anspruche 1 bis 3, **dadurch gekennzeichnet,**
**dass** der Grundkörper (5) des Rollfahrwerks (1) unter den Rollen (3) Gleitflächen (13) aufweist zum Wechseln der Förderrichtung aus einer Rollbewegung Quer und scharfkantig auf 70° bis 110°, vorzugsweise auf 85° bis 95°, besonders bevorzugt auf 90° in eine Gleitbewegung und umgekehrt zum Wechseln der Förderrichtung aus der Gleitbewegung Quer und scharfkantig in die Rollbewegung.

5. Transporttasche (28) nach einem der Anspruche 1 bis 4, **dadurch gekennzeichnet,**
**dass** der Grundkörper (5) des Rollfahrwerks (1) unter den Rollen (3) beidseitig eine untere Kupplung (12) aufweist, für den Transport auf Förderstrecken mit Steigungen zu der waagerechten Position in einem steilen Winkel (Z) bis mindestens 65°.

6. Transporttasche (28) nach einem der Anspruche 1 bis 5, **dadurch gekennzeichnet,**
**dass** die Breite (N) unter den Gleitflächen (13) des Rollfahrwerks (1) bei dem Aufstauen der Transporttaschen (28) eine Öffnung (74) aufweist, ausreichend zum Hineinragen eines Stoppelements (38) der Vereinzelung (47) oder Anhalters (37), zum Sortieren der Transporttaschen (28).

7. Transporttasche (28) nach einem der Anspruche 1 bis 6, **dadurch gekennzeichnet,**
**dass** der Beladerahmen (19) und die Halteplatte (16) des Rollfahrwerks (1) fest und nicht drehbar verbunden sind in einem Winkel (V) gegenüber der Ebene durch die Achse (4) und (68) von 5° bis 45° vorzugsweise von 10° bis 30° besonders bevorzugt von 12° bis 20°.

8. Transporttasche nach einem der Ansprüche 1 bis 7, **dadurch gekennzeichnet,**
**dass** die Halteplatte (16) winkelartig gegenüber der Ebene durch die Achse (4) und (68) ausgebildet ist in einen Winkel (W) von 10° bis 45°, vorzugsweise von 25° bis 35° aufweist, und
**dass** der Winkel (V) des Beladerahmens (19) gegengerichtet zum Winkel (W) der Halteplatte (16) ausgebildet ist und
**dass** die entstehende Tiefe (A) zwischen der Vorderwand (20) und Rückwand (24) der Transporttasche (28) im Wesentlichem ein Maß von (2S) enthält, sodass der Grundkörper (5) eine im Wesentlichem vertikale (36) Position einnimmt und
**dass** die Tiefe (A) der Transporttasche (28) ein Maß von 20 bis 150 mm, vorzugsweise von 40 bis 80 mm, besonders bevorzugt von 55 bis 70 mm aufweist und eine manuelle Entladung der Transporttaschen (28) ermöglicht.

9. Transporttasche nach einem der Ansprüche 1 bis 8, **dadurch gekennzeichnet,**
**dass** Datenträger (18) im Rollfahrwerk (1) vorgesehen sind und
**dass** im Rollfahrwerk (1) Schalldämmungsmittel (71) enthalten sind für einen geräuscharmen Betrieb und
**dass** das Rollfahrwerk (1) mindestens eine Öse (8) aufweist ist zur Mitnahme von Gegenständen (41) und
**dass** die Halteplatte (16) Anschläge (39) aufweist um den Pendelwinkel (X) in dem Grundkörper (5) auf 5° bis 35°, vorzugsweise auf 15° bis 25° zu begrenzen und
**dass** die Rotationsbewegung der Halteplatte (16) mit dem Anschlagen (84) des Grundkörpers (5) begrenzt wird auf einen Rotationswinkel (U) von 10° bis 45°, vorzugsweise von 15° bis 35° und
**dass** die Halteplatte (16) des Rollfahrwerks (1) eine Führung (9) mit einer Gleitfläche (14) aufweist zum Ausrichten der Transportasche (28) beim Quertransport auf den Gleitflächen (13) und
**dass** die Tragwand (75) der Transporttasche (28) faltbar in Förderrichtung (35) ist und zumindest teilweise aus flexiblem Stoff gebildet ist.

10. Förderanlage mit mindestens einer Transporttasche (28) nach einem der Ansprüche 1 bis 9
- mit einer Transportschiene (33),
- mit einer in der Transportschiene (33) in einer Förderrichtung (35) bewegbar gelagerten Förderelement (29) mit Mitnehmern (30),
- mit in der Transportschiene (33) unterhalb des Förderelements (29) gelagerten Transporttaschen (28),
- mit einem Steilförderer (45) zum Fördern der Transporttaschen (28) bei Steigungen in einem Winkel (Z) bis mindestens 65° mit dem Antrieb an die untere Kupplung (12) mit Hilfe der Steigungsmitnehmer (44),
- mit Staustrecken (70) mit Vereinzelungen (47) und Anhaltern (37),
- mit Bogen Winkel Weichen (80) mit seitlich an die Transportschiene (33) im Winkel (P) angeschlossene Transportschienen (33) zum Einschleusen oder Ausschleusen von Transporttaschen (28),
- mit Quertransport Weichen (81) zum scharfkantigen Wechseln der Förderrichtung aus der Rollbewegung in die Gleitbewegung, sodass der Transport von den Rollen (3) auf die Gleitflächen (13) des Rollfahrwerks (1) übertragen wird,
- mit einer Beladestation (50) bestehend vorzugsweise aus einen Steilförderer (45), einer Gefälle-Strecke (55) mit einer Vereinzelung (47) zur Freigabe der aufgestauten leeren Transporttaschen (28), einen quer zur Förderrichtung (35) angeordneten Förderer (49), einem Beladetisch (56) zum manuellen oder mit einem Transportband (66) Transport des Förderguts (53) in die Transporttasche (28), einer Gefälle-Strecke (51) mit vorzugsweise an die Gefälle-Strecke (51) angeschlossenen Steilförderer (45),
- mit Bahnhöfen für die beladenen Transporttaschen (28) zum Ausladen des Förderguts (53)

11. Beladestation (50) nach einem der Ansprüche 1 bis 10, **dadurch gekennzeichnet,**
**dass** zum Aufstellen und Positionieren der Transporttaschen (28) am Beladetisch (56), die Transporttaschen (28) aus der Rollbewegung in der Gefälle-Strecke (55) im Anschluss an den quer zur der Förderrichtung (35) angeordneten Förderer (49) in eine Gleitbewegung in Förderrichtung (67) auf den Gleitflächen (13) des Rollfahrwerks (1) mithilfe eines Förderelements versetzt werden und
**dass** ein stetiges Fördern der Transporttaschen (28) vorgesehen ist mit Ausnahme der Stoppzeit zum Beladen der Transporttaschen (28) mit dem Fördergut (53) und
**dass** beim Quertransport im Förderer (49) mindesten eine Transporttasche (28) vorgesehen ist, vorzugsweise drei, in folgender Zuordnung: Pos.1 - Startposition der leeren Transporttasche (28) aus der Rollbewegung in die Gleitbewegung im Anschluss aus der Gefälle-Strecke (55) in den Förderer (49) in Förderrichtung (67), Pos.2 - Beladeposition vor dem Beladetisch (56) oder dem Transportband (66) und beladen der Transporttasche (28) mit Fördergut (53), Pos.3 - Startposition der beladenen Transporttasche (28) aus der Gleitbewegung in die Rollbewegung in Förderrichtung (35) in die Gefälle-Strecke (51) und
**dass** eine Leiste (52) unter dem Förderer (49) vorgesehen ist zum Ausrichten der Transporttasche (28) mit Hilfe der Halteplatte (16) mit der Führung (9) und gleichzeitigem Öffnen des Tragrahmens (19), auf einen Winkel (K) und
**dass** in der Beladeposition Pos.2 der Förderer (49) inklusive der Leiste (52) vorzugsweise auf einen Winkel (G) ausgerichtet wird zum Erzeugen eines Winkels (K) des Beladerahmens (19) größer als der Winkel (V) und das der Winkel (K) ein Maß aufweist von 20° bis 55°, vorzugsweise von 30° bis 45°, besonders bevorzugt von 35° bis 40°.

12. Bogen Winkel Weiche (80) nach einem der Ansprüche 1 bis 11, **dadurch gekennzeichnet,**
**dass** die Bogen Winkel Weiche (80) einen Grundkörper (59) aufweist mit einer Winkelverteilung (P) der Transportbahnen von 20° bis 45°, vorzugsweise von 30° bis 40° mit einem Radiusübergang (J) im Winkel Bereich und
**dass** die Weiche (80) eine schaltbare Weichenzunge (58) mit einer Spitze (78) aufweist zum Einschleusen oder Ausschleusen von Transporttaschen (28) in die Förderrichtungen (65;77;63;64) und einen Antrieb (60) zum Umschalten der Förderrichtung und
**dass** das Umschalten in Förderrichtung (64;77) gegen die Weichenzungenspitze mit dem Antrieb (60) erfolgt und in die Richtung (63;65) vorzugsweise von dem Grundkörper (5) des Rollfahrwerks (1) der Transporttasche (28) geschaltet wird.
